Europäisches Patentamt

European Patent Office

Office européen des brevets

(11) Publication number: **0 282 304**
A2

## (12) EUROPEAN PATENT APPLICATION

(21) Application number: 88302093.5

(22) Date of filing: 10.03.88

(51) Int. Cl.⁴: **G 01 L 5/24**
G 01 L 1/22, B 25 B 23/142

(30) Priority: 11.03.87 IE 621/87

(43) Date of publication of application:
14.09.88 Bulletin 88/37

(84) Designated Contracting States:
AT BE CH DE ES FR GB GR IT LI LU NL SE

(71) Applicant: DELINCOURT LIMITED
10/11 High Street
Limerick (IE)

(72) Inventor: Ryan, Liam
Ballyneety
County Limerick (IE)

Zellmann, Rudi
Drombranna
County Limerick (IE)

(74) Representative: Bowman, Paul Alan et al
LLOYD WISE, TREGEAR & CO. Norman House 105-109
Strand
London WC2R OAE (GB)

(54) Torque transducers.

(57) A digital readout torque wrench (1) or screwdriver (60).
The tool has a separate spring element (3) which is not required
to transmit torque but senses the deflection of the tool as it
transmits torque. This separate spring element (3) may form a
printed circuit board (23) for electronic circuitry which supplies
a signal for a digital readout display (4). The spring element is
easily calibrated.

EP 0 282 304 A2

## Description

The present invention relates to strain gauge torque transducers and in particular to tools, such as torque wrenches and torque screw drivers incorporating such strain gauge torque transducers.

It has been appreciated that the use of a strain gauge in tools such as torque wrenches would be ideal and indeed, there have been produced torque wrenches of various constructions which incorporate strain gauge transducers. For example, U.S. Patent Specification Nos. 3,895,517, 3,970,155, 4,073,187, 4,426,887, 4,319,494, 4,244,213, 4,257,263, 4,641,538, 4,006,629, 4,397,196 and 4,125,016 all disclose such tools. Unfortunately, there are certain major disadvantages with such torque wrenches, generally called digital readout torque wrenches, namely, they are costly, very often require a considerable amount of expensive electronic circuitry and further, the accuracy is not always as desired.

The most critical mechanical component in a strain gauge transducer is what is often referred to as the spring element. The function of the spring element is to serve as the reaction for the applied load and to focus the effect of the load into a uniform strain field where strain gauges can be placed for load measurement. Accordingly, it is essential that the strain level in the gauged area of the spring element responds in a linear elastic manner to the applied load. Thus, the ideal transducer is characterized by an unvarying proportional relationship between the strain and the load. This applies equally whether the spring element senses a bending strain, a direct stress or a shear.

The major problem with linearity is that all units will exhibit some degree of microplasticity and lower stress will mean a smaller deviation from the ideal linear/elastic behavior and therefore, everything that can be done to reduce this stress is desirable. Further, non-integral mechanical connections of any kind are to be avoided. The calibration of conventional torque transducers used in digital readout torque tools is difficult and complex and must be done electronically. It is difficult to compensate for creep over time.

With tools such as digital readout torque screwdrivers and wrenches there is a considerable problem in the use of strain gauges which have to be bonded to a torque sensing portion of the tool. Many methods are used to do this, most of which involve some bonding or gluing of the strain gauge to the tool body. Another major problem with conventional strain gauges as used in such tools is that the gauge factor, which is defined as the output signal in mV per 1,000 microstrains, is generally of the order of 2 with a maximum output of 10mV for a 5V power supply. An amplifier is also required which further increases the cost of the device and its complexity. A further problem with many of the known torque screwdrivers and wrenches is that, because the spring element forms an integral portion of the tool body, faults such as deformation of the spring element or physical damage to the strain gauges are difficult and expensive to repair.

In U.S. Patent Specification No. 4,125,016 (Lehoczky) there is described a battery operated digital readout torque wrench in which the strain sensing elements are removed from the wrench handle and are mounted on a flexure element which forms part of the wrench and directly contacts a fastener as torque is applied. Indeed, the flexure element forms an insert within a socket structure at the end of the wrench handle. The reason for using, in effect, the turning head of the wrench rather than the handle is to eliminate what was perceived to be the unacceptable sensitivity to variation in the point of force application of digital readout torque wrenches such as disclosed in U.S. Patent Specification No. 3,895,517 (OTTO). The use of an insert piece in this U.S. Patent Specification No. 4,125,016 (Lehoczky) is for simplifying the construction and assembly of the wrench and arises because of the placing of the strain sensing elements in the socket structure rather than the wrench handle. It is further appreciated that this relocation of the strain sensing elements or gauges is not by any means the answer to the problem and indeed has all the problems associated with more conventional digital readout torque wrenches as detailed above. Again it will be appreciated that the strain gauges are still applied directly to the physical torque applying structure of the wrench with all its attendant disadvantages, therefore, there are considerable problems in manufacture and assembly. The main problem however is that the construction and physical configuration of spring element on which the strain gauges are mounted is controlled by the physical characteristics of the wrench where the strain gauges have to be mounted rather than the functions the spring element has to perform.

What is needed is a more radical approach to the construction of what is, in effect, the most important element of a digital readout torque tool namely the strain gauge torque transducer.

Similarly, U.S. Patent Specification No. 4,641,538 (Heyraud) describes a battery operated digital readout torque wrench in which the strain sensing elements are removed from the wrench handle and are mounted on a spring element which is force-fitted to the wrench handle at one end and has a socket for reception of workpiece-contacting fittings at its other end. The same comments apply to this Patent Specification as to the U.S. Patent Specification No. 4,125,016 (Lehoczky) because the strain gauges are still applied directly to the physical torque applying structure of the wrench. Again this torque wrench differs from other such wrenches only insofar as the body of wrench comprises a number of separate interlocking parts.

It is an object of the present invention to produce an improved construction of digital readout torque tool.

It is another object of the invention to provide a digital readout torque tool with an efficient spring element in which there is an unvarying proportional relationship between the strain and the load.

It is another object of the present invention to obviate the need for bonding and gluing of the strain gauge to the tool body.

It is still a further object of the invention to provide a strain gauge torque transducer for a digital readout torque tool in which the gauge factor is in excess of 2 and ideally of the order of 10.

It is still further object of the present invention to provide a strain gauge torque transducer which will obviate the need for the use of an amplifier.

According to the invention there is provided a strain gauge torque transducer for a digital readout torque instrument (1) of the type comprising:-

a strain gauge assembly (6, 7) attached to a spring element (3) characterised in that the spring element (3) is mounted in a non torque transmitting manner in the instrument body (2).

The major advantage of the strain gauge torque transducer according to the present invention is that it is possible to use an ideal transducer in that you can choose the construction of the material for the spring element and prepare and use any strain gauge assembly suitable since the material of the spring element is no longer determined by that of the torque instrument in which it is fitted and further, there is no longer any need to bond the strain gauges to a torque sensing portion of the tool. This is undoubtedly a major advantage as the bonding and gluing of the strain gauge to the tool body is eliminated. Further, the spring element no longer forms an integral part of the tool body so that deformation of the spring element or physical damage to the strain gauges are no longer difficult and expensive to repair. It is merely a question of removing and replacing of the strain gauge torque transducer.

Further, the invention provides a strain gauge torque transducer in which the spring element forms part of an integral printed circuit board. The technology of manufacturing printed circuit boards is well known and is now relatively cheap so the fact that the spring element forms part of a printed circuit board reduces costs and improves efficiency.

Further, the invention provides a strain gauge torque transducer in which the spring element is formed from a plastics material. It will be readily appreciated that to be able to form the spring element from a plastics material we reduce manufacturing costs in that the plastics material can be moulded and formed in any suitable way for mounting of the spring element on the instrument body.

In another embodiment of the invention, the spring element is formed from a ceramic material. Ceramics are an ideal material for use as part of a strain gauge torque transducer but will be readily appreciated that for various reasons they are not particularly suitable materials for use with tools. When used with ordinary instruments and tools the bonding is quite difficult and additionally, elimination of bonding eliminates surface cleaning and the use of protective coatings.

In a further embodiment of the invention, the strain gauges can be screen printed onto the spring element. Once the strain gauge can be screen printed onto the spring element the transducer is particularly suitable for high volume manufacture and fitting as against conventional strain gauges. The great advantage of screen printing is that there is no bonding except in the screen printing operation so that the whole circuit board can be prepared in the one operation.

Further, the strain gauges may comprise a plurality of thick film resistors. The advantages of the thick film resistors is that they can have a high impedance, and thus extremely low power consumption. It is a very cheap low cost transducer in comparison with more conventional strain gauges. Gauge factors of approximately 10 are not unusual with instruments according to the present invention.

Alternatively, the strain gauges may comprise a plurality of thin film resistors. The advantages of thin film resistors is that they can have a high impedance of the order of 20,000 ohms and thus a low power consumption. It is possible to have gauge factors as high as 20 and further thin film resistors can be provided at a relatively low cost.

In one practical embodiment of the invention, the spring element of the strain gauge torque transducer includes a shoulder which extends outwardly to engage the instrument body and adjustment means for engaging the instrument body at another spaced apart position to allow flexure of the spring element in response to deflection of the torque instrument as it transmits torque. The advantage of this arrangement is firstly that the transducer can be easily fitted and removed for maintenance and additionally by the adjustment means it can be relatively easily altered and adjusted on site and any calibration that needs to be done can be done on site.

The invention will be more clearly understood from the following description of some preferred embodiments thereof given by way of example only with reference to the accompanying drawings.

Fig. 1 is a perspective, partially cut-away view of portion of a torque wrench according to the invention;

Fig. 2 is a perspective view of a portion of a spring element for mounting within the torque wrench of Fig. 1;

Fig. 3 is a side view of an alternative construction of spring element for mounting within the torque wrench of Fig. 1;

Fig. 4 is a side, part sectional view, with some sectional lines omitted, of another construction of torque wrench according to the invention;

Fig. 5 is a plan, part sectional view of the torque wrench of Fig. 4;

Fig. 6 is a side view of another construction of spring element according to the invention;

Fig. 7 is a plan view of the spring element of Fig. 6;

Fig. 8 is a side view of a still further construction of spring element according to the invention;

Fig. 9 is a plan view of the spring element of Fig. 8;

Fig. 10 is an elevational cross-sectional view of a torque screwdriver according to the invention;

Fig. 11 is a cross-sectional plan view of the torque screwdriver;

Fig. 12 is a cross-sectional view in the direction of the arrows XII-XII of Fig. 10;

Fig. 13 is a cross-sectional view in the direction of the arrows XII-XIII of Fig. 10;

Fig. 14 is a perspective view of the spring element used with the torque screwdriver; and

Fig. 15 is a schematic outline of the strain gauges used.

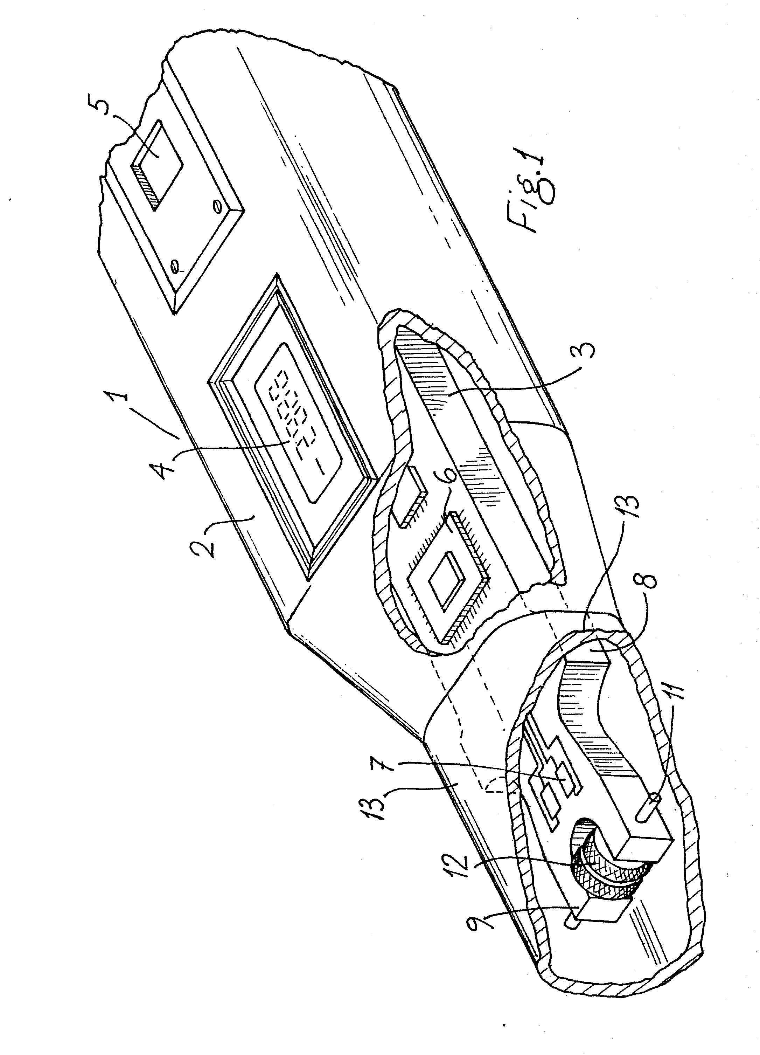

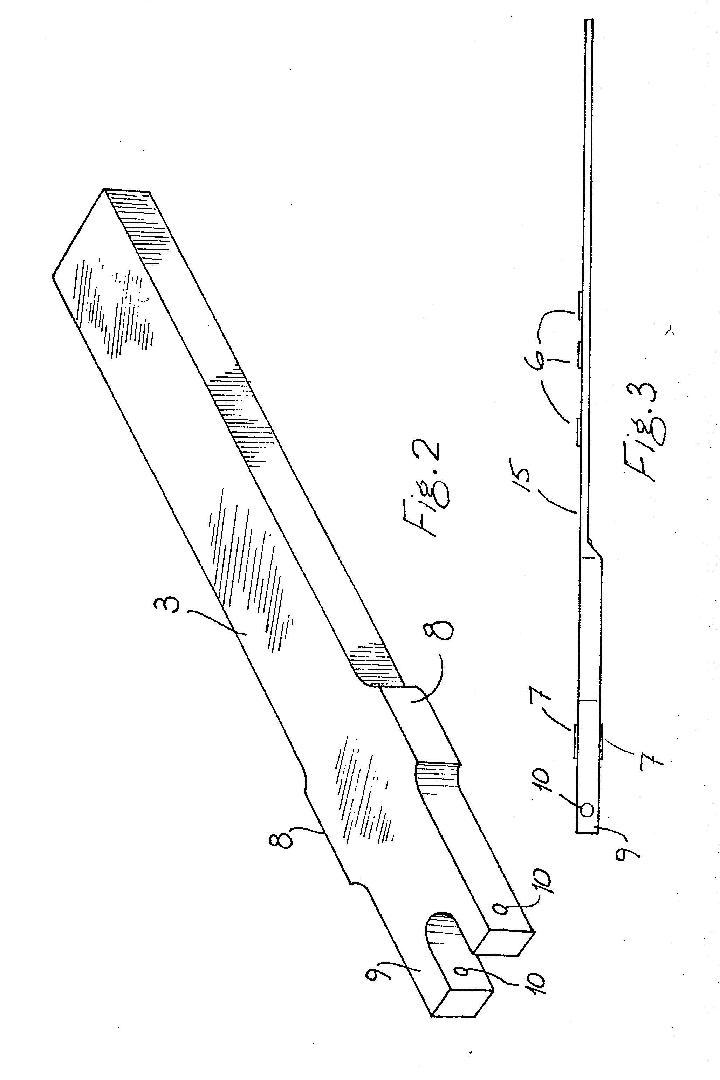

Referring to the drawings and initially to Figs. 1 and 2 thereof, there is provided a digital readout torque tool, in this embodiment a torque wrench, indicated generally by the reference numeral 1 having an essentially conventional physical construction it its external configuration and having a hollow body 2. Mounted within the hollow body 2 is a spring element 3 of rectangular cross-section. The digital readout torque wrench 1 also has a display namely, an LCD readout 4 and control switches 5. Mounted on the spring element 3 is an electronic circuit 6 connected electrically to screen printed thick film resistor strain gauges 7, to the LCD 4 and to the control switches 5. There are four strain gauges 7 - two on the upper surface and two, not shown, on the lower surface of the spring element 3.

It will be noted that the spring element 3 has a shoulder 8 and a bifurcated fork 9 at its far end. The bifurcated fork 9 has threaded through-holes 10 within which are mounted adjustment screws 11 operated by knurled knobs 12 to form adjustment means. The hollow body 2 also has a hole, not shown, to allow access to the knurled knobs 12. The hollow body 2 has a tapered socket 13 for reception of the spring element 3.

To mount the spring element 3 within the hollow body 2, the spring element 3 is pushed up into the hollow body 2 until its shoulders 8 engage within the socket 13 formed in the hollow body 2. The knobs 12 are then used to adjust the spring element 3 transversely within the hollow body 2. Thus, the printed strain gauges 7 can be calibrated or set to zero. By suitable programming of chips and design of the electronic circuit 6 it will be appreciated that the torque wrench may be used to provide any suitable features. For example, and by no means exhaustively, memory may be provided of previous torques supplied, maximum torque can be signalled, torque can be pre-set, and so on. It is however, not the purpose to discuss these features which are desirable as they will be readily apparent to those skilled in the art. It suffices to say that the circuit 6 can be used to provide whatever displays are required.

Since the spring element of the torque transducer does not physically transmit torque but merely moves in response to the movement of the torque tool itself, its composition is independent of its torque transmitting qualities and it merely has to be suitable for reception of the strain gauges. This is a significant advantage. Ideally, it is of a plastics or ceramic material.

It is envisaged that the spring element according to the invention may be secured to a tool body in many positions, other than within a hollow tool body as described above. For example the spring element may be mounted within an external slot in the tool body. It will be appreciated that this facilitates relatively easy insertion and removal.

It will be appreciated further that the construction of spring element is such that the use of thick film resistors which are screen printed onto the spring element will make the transducer particularly suitable for high volume manufacture and fitting as against conventional strain gauges. Further, the film resistors can have a high impedance such as 5000 to 10,000 ohms resulting in extremely low power consumption. This is obviously of vital importance with a battery driven instrument. The response is linear within $\pm$ 1500$\mu\xi$. It is envisaged that, alternatively, the strain gauge transducer may comprise thin film resistors, in which case the impedance may be as high as 20,000 ohms, and further, the gauge factor may be as high as 20.

There is excellent repeatability with the torque wrench and since no bonding or glues are required it eliminates surface cleaning and the use of protective coatings.

Further, there is no gauge slipping or creeping due to softening or ageing of adhesives. Essentially, the present invention allows the use of very cheap low cost transducers in comparison with more conventional strain gauges. Further, with the transducer according to the present invention it is possible to have a gauge factor of approximately 10 giving an output signal of 10 mV/V/1000. Accordingly, there is a calculated error of $\pm$ 0.1% (5V supply) enabling the signal to be processed directly through an A/D converter without the need of an amplifier. It will be appreciated that an amplifier would require additional components, thereby increasing cost and noise. This compares very favorably with conventional strain gauges having a typical gauge factor of 2 which are normally used in such digital readout torque wrenches. Accordingly, our torque wrench has a theoretical accuracy of $\pm$ 0.1% and can read in the very lowest range against conventional torque wrenches which can only read accurately down to approximately 10% below full torque.

It will further be appreciated that, because the strain gauges 7 are situated at the upper and lower surfaces of the spring element 3, they are for shear stress measurement. In certain conditions we have found that shear stress measurement is more accurate than bending stress measurement.

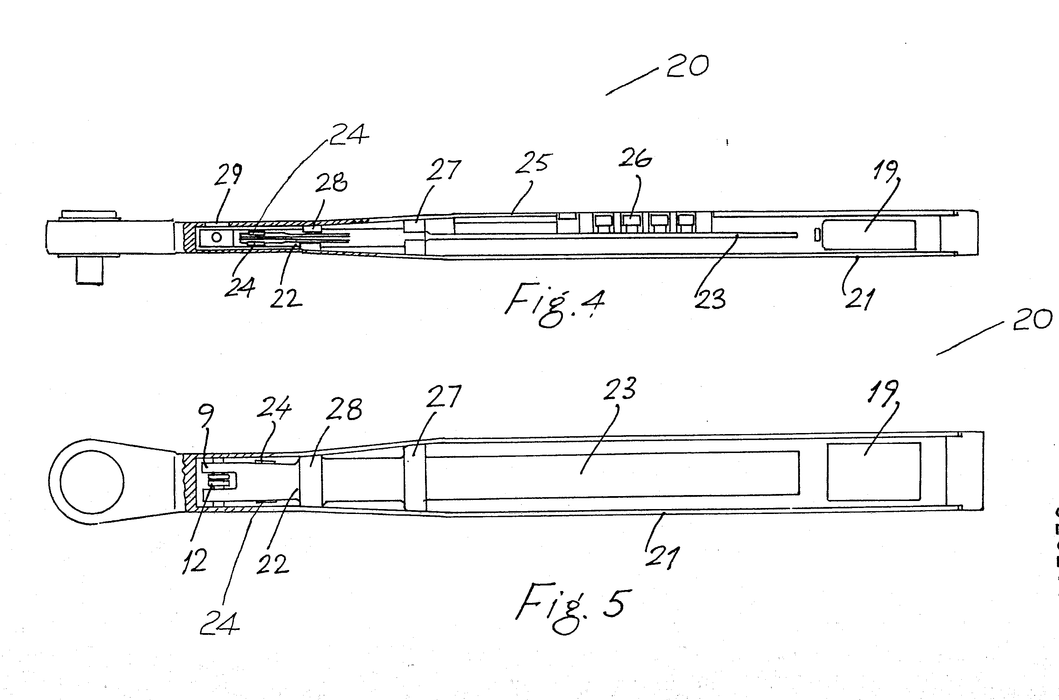

Referring to Fig. 3 there is illustrated another construction of spring element 15 for mounting within the digital readout torque wrench 1. The spring element 15 is of slightly different shape than the spring element 3 but in all other respects is similar.

Referring now to Figs. 4 and 5 there is illustrated a digital readout torque wrench indicated generally by the reference numeral 20, in which parts similar to those described with reference to the previous drawings are identified by the same reference numerals. The digital readout torque wrench 20 has a hollow body 21, housing a spring element 22 incorporating a printed circuit board (P.C.B.) 23 and four thick film resistor printed strain gauges 24. In this embodiment the printed strain gauges are on the side surfaces of the spring element 22. For simplicity, the elements of the printed circuit board are not illustrated and the P.C.B. 23 is merely illustrated as a blank portion on the drawings. Again, an LCD 24 and switches 26 are provided. The spring element 22 has a pair of tapered shoulders 27 and 28 to facilitate fitting within the hollow body 21. A hole 29 is provided in the hollow body 21 to allow access to the knurled knobs 12 for adjustment of the spring element 22 within the hollow body 21. Because the printed strain gauges 24 are situated on the side surfaces of the spring element 22, they are for bending stress measurement. A battery 19 for P.C.B. 23 is housed within the hollow body 21.

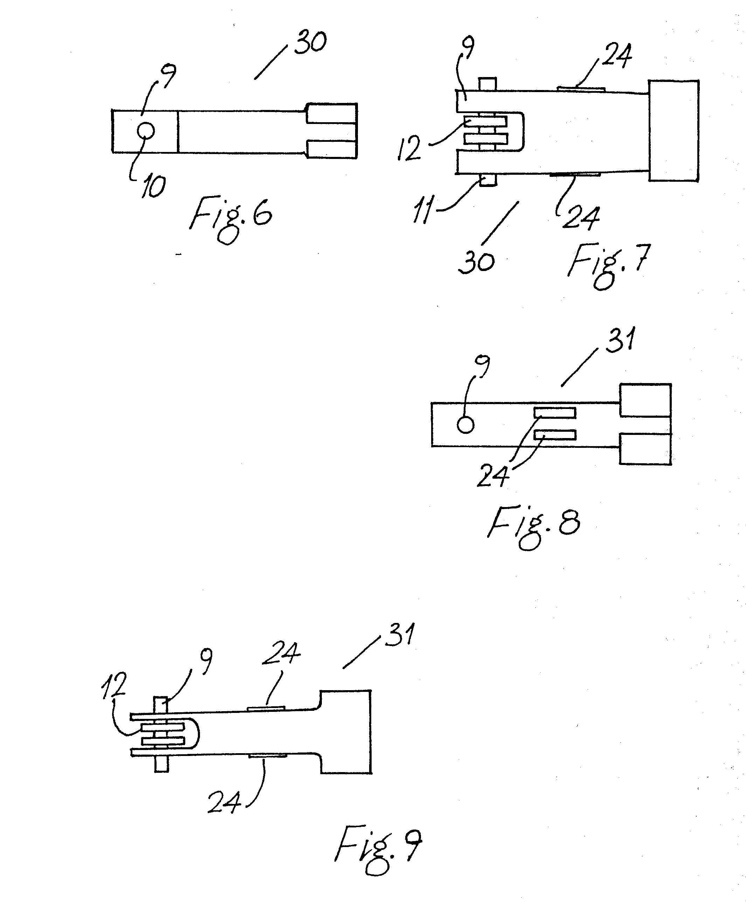

Referring to Figs. 6 and 7 there is illustrated an alternative construction of spring element 30 in which parts similar to those described with reference to previous drawings are identified by the same reference numerals. In this embodiment the spring element 30 does not incorporate a printed circuit board and is of rectangular cross-section.

Referring to Figs. 8 and 9 inclusive there is illustrated an alternative construction of spring element 31, substantially similar to the spring element illustrated in Figs. 6 and 7, except that the spring element 31 is of square cross-section.

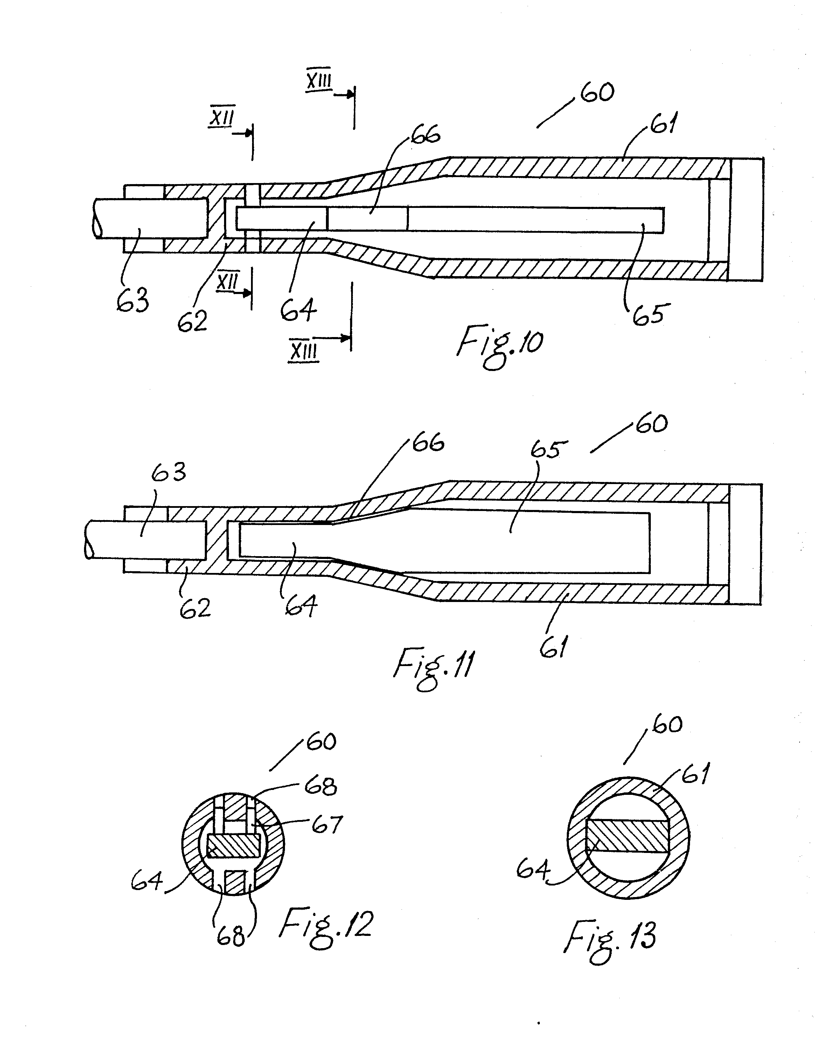

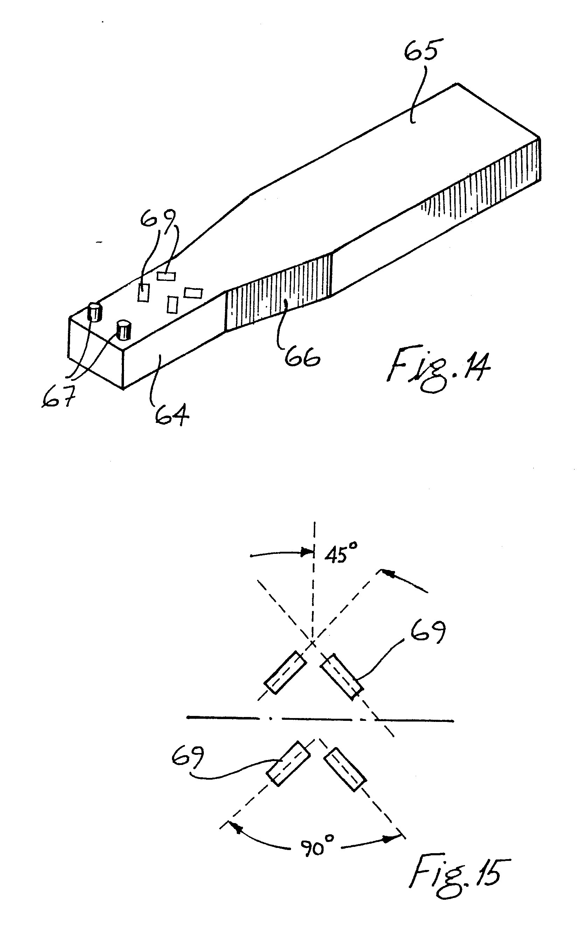

Referring to Figs. 10 to 15 inclusive there is provided a digital readout torque screwdriver indicated generally by the reference numeral 60 comprising a hollow body 61 having a socket 62 for reception of a screwdriver bit 63. A spring element 64, again incorporating a P.C.B. 65 (not shown in detail) is mounted within the hollow body 61 and has a shoulder 66 which forms a force fit within the hollow body 61. The free end of the spring element 64 adjacent the bit 63 is mounted by a pair of threaded screws 67 within holes 68 in the hollow body 61. The screws 67 allow adjustment and calibration of the spring element 64 which also contains as can be seen from Fig. 14 four printed strain gauges 69 which are arranged at 45° (see Fig. 15).

In use, the torque screwdriver 60 operates in substantially the same way as the digital readout torque wrenches hereinbefore described.

## Claims

1. A strain gauge torque transducer for a digital readout torque instrument (1) of the type comprising:-
   a strain gauge assembly (6, 7) attached to a spring element (3), characterised in that the spring element (3) is mounted in a non torque transmitting manner on the instrument body (2).

2. A strain gauge torque transducer as claimed in Claim 1, characterised in that the spring element (3) forms part of an integral printed circuit board (23).

3. A strain gauge torque transducer as claimed in Claim 1 or 2, characterised in that the spring element (3) is formed from a plastics material.

4. A strain gauge torque transducer as claimed in Claim 1 or 2, characterised in that the spring element (3) is formed from a ceramic material.

5. A strain gauge torque transducer as claimed in any preceding claim, characterised in that the strain gauge (7) is screen printed onto the spring element (3).

6. A strain gauge torque transducer as claimed in any preceding claim, characterised in that the strain gauge (7) comprises a plurality of thick film resistors.

7. A strain gauge torque transducer as claimed in any preceding claim, characterised in that the strain gauge (7) comprises a plurality of thin film resistors.

8. A strain gauge torque transducer as claimed in any preceding claim, characterised in that the spring element (3) includes a shoulder (8) which extends outwardly to engage the instrument body (2) and adjustment means (11, 12) for engaging the instrument body (2) at another spaced-apart position to allow flexure of the spring element (3) in response to deflection of the torque instrument (1) as it transmits torque.

9. A strain gauge torque transducer as claimed in Claim 8, characterised in that the adjustment means (11, 12) comprises a threaded hole (10) formed in said spring element (3) and an adjustment screw (11) threaded in said threaded hole (10).

10. A digital readout torque instrument (1) incorporating a strain gauge torque transducer as claimed in any preceding claim, characterised in that it comprises an instrument body (2), a tool attached to the body (2) and a digital torque readout display (4).

11. A digital readout torque instrument (1) as claimed in Claim 10, characterised in that the instrument body (2) is hollow and the spring element (3) is rigidly connected within the instrument body (2) at a static mounting position and at another spaced apart position adjustment position it is connected for transverse adjustment in a plane parallel to the plane of operation of the instrument (1) for calibration of the strain gauge assembly (6, 7).

12. A digital readout torque instrument (1) as claimed in Claim 10 or 11, characterised in that the instrument is a torque wrench.

13. A digital readout torque instrument (1) as claimed in Claim 10 or 11, characterised in that the instrument is a torque screwdriver (60).

Fig.1

3

8

9

8

10

10

*Fig.2*

15

10  7  6

9

7

7

*Fig.3*

0282304

Fig. 4

Fig. 5

Fig.6

Fig.7

Fig.8

Fig.9

0282304

Fig.10

Fig.11

Fig.12

Fig.13

0282304

Fig.14

Fig.15